# EUROPEAN PATENT APPLICATION

(11) **EP 4 852 436 A1**
(43) Date of publication of application: **09.12.2026**
(21) Application number: 24923526.8
(22) Date of filing: 13.12.2024
(51) Int. Cl.: H04N 21/4363

(54) **SCREEN-MIRRORED PICTURE DISPLAY METHOD AND SYSTEM, ELECTRONIC DEVICE AND STORAGE MEDIUM**

(30) Priority: 07.02.2024 CN 202410175945
(71) Applicant: ZTE Corporation, Shenzhen, Guangdong 518057 (CN)
(72) Inventor: FANG, Shu, Shenzhen, Guangdong 518057 (CN)
(74) Representative: Ziebig Hengelhaupt Intellectual Property Attorneys Patentanwaltskanzlei PartGmbB
(86) International application number: PCT/CN2024/139162
(87) International publication number: WO 2025/167324

(57) **Abstract**

The present disclosure provides a screen-mirrored picture display method and system, an electronic device and a storage medium. The method comprises: a first device establishes a communication connection with a second device (S201), the first device displays a three-dimensional image of a target picture (S203), and the second device displays a two-dimensional image of the target picture (S202), wherein the three-dimensional image of the target picture is obtained by the first device or the second device converting the two-dimensional image of the target picture on the basis of a screen mirroring operation instruction, and the screen mirroring operation instruction is used for instructing to display the three-dimensional image of the target picture on the first device by means of screen mirroring.

## Description

The present disclosure claims priority to Chinese Patent Application No. 202410175945.0, filed on February 7, 2024, the entire contents of which are incorporated herein by reference.

### TECHNICAL FIELD

The present disclosure relates to the technical field of screen mirroring, and in particular, to a screen-mirrored picture display method and system, an electronic device, and a storage medium.

### BACKGROUND

With the rapid development of the digital media and entertainment industries, users have an increasing demand for movie and TV viewing experience. Besides traditional mobile phones, tablet computers and televisions, multi-screen collaboration is gradually becoming a new choice for viewers to experience film and television works.

Currently, multi-screen collaboration mainly uses video streaming for screen mirroring. A transmitting end (e.g., a source end) captures each frame of a picture and dynamically transmits pictures to a receiving end (e.g., a sink end), then the sink end decodes the pictures through a decoder, and finally displays the decoded pictures on an interface object (e.g., a surface view (SurfaceView)).

### SUMMARY

In one aspect, a screen-mirrored picture display method is provided, which is applied to a first device. The screen-mirrored picture display method includes: establishing a communication connection with a second device; and after receiving a screen mirroring operation instruction sent from the second device, displaying a three-dimensional image of a target picture by performing screen mirroring. The three-dimensional image of the target picture is obtained by the first device or the second device performing conversion processing on a two-dimensional image of the target picture based on the screen mirroring operation instruction, and the screen mirroring operation instruction is used to indicate the first device to display the three-dimensional image of the target picture by performing screen mirroring.

In another one aspect, a screen-mirrored picture display method is provided, which is applied to a second device. The screen-mirrored picture display method includes: after establishing a communication connection with a first device, sending a screen mirroring operation instruction to the first device, to make the first device display a three-dimensional image of a target picture by performing screen mirroring. The screen mirroring operation instruction is used to indicate the first device to display the three-dimensional image of the target picture by performing screen mirroring. The three-dimensional image of the target picture is obtained by the first device or the second device performing conversion processing on a two-dimensional image of the target picture based on the screen mirroring operation instruction.

In yet another aspect, a screen-mirrored picture display method is provided. The screen-mirrored picture display method includes: establishing a communication connection with a second device by a first device; displaying a three-dimensional image of a target picture by the first device, and displaying a two-dimensional image of the target picture by the second device. The three-dimensional image of the target picture is obtained by the first device or the second device performing conversion processing on a two-dimensional image of the target picture based on the screen mirroring operation instruction, and the screen mirroring operation instruction is used to indicate the first device to display the three-dimensional image of the target picture by performing screen mirroring.

In yet another aspect, a screen-mirrored picture display system is provided. The screen-mirrored picture display system includes: a first device and a second device. Both the first device and the second device store executable instructions. In a case where the first device and the second device execute the instructions, the screen-mirrored picture display method according to any of the above-mentioned aspects is implemented.

In yet another aspect, a screen-mirrored picture display apparatus is provided, which is applied to a first device. The screen-mirrored picture display system includes: a communication module and a display module.

The communication module is configured to establish a communication connection with a second device. The display module is configured to, after receiving a screen mirroring operation instruction sent from the second device, display a three-dimensional image of a target picture by performing screen mirroring. The three-dimensional image of the target picture is obtained by the first device or the second device performing conversion processing on a two-dimensional image of the target picture based on the screen mirroring operation instruction, and the screen mirroring operation instruction is used to indicate the first device to display the three-dimensional image of the target picture by performing screen mirroring.

In yet another aspect, a screen-mirrored picture display apparatus is provided, which is applied to a second device. The screen-mirrored picture display apparatus includes: a communication module.

The communication module is configured to, after establishing a communication connection with a first device, send a screen mirroring operation instruction to the first device, to make the first device display a three-dimensional image of a target picture by performing screen mirroring. The screen mirroring operation instruction is used to indicate the first device to display the three-dimensional image of the target picture by performing screen mirroring. The three-dimensional image of the target picture is obtained by the first device or the second device performing conversion processing on a two-dimensional image of the target picture based on the screen mirroring operation instruction.

In yet another aspect, an electronic device is provided. The electronic device includes: a memory and a processor. The memory and the processor are coupled. The memory is used to store computer programs. In a case where the processor executes the computer programs, the screen-mirrored picture display method according to any of the above-mentioned aspects is implemented.

In yet another aspect, a computer-readable storage medium is provided, where a computer program instruction is stored on the computer-readable storage medium, when the computer program instruction is performed by the processor, the screen-mirrored picture display method according to any of the above-mentioned aspects is implemented.

In yet another aspect, a computer program product is provided, where the computer program product includes computer program instructions, when the computer program instructions are executed, the screen-mirrored picture display method according to any of the above-mentioned aspects is implemented.

### BRIEF DESCRIPTION OF THE DRAWINGS

In order to illustrate the technical solutions in the present disclosure more clearly, accompanying drawings needed to be used in some embodiments of the present disclosure will be introduced briefly below. Obviously, the described accompanying drawings below are merely accompanying drawings of some embodiments of the present disclosure, and for a person of ordinary skill in the art can obtain other accompanying drawings according to these accompanying drawings.
FIG. 1 is a schematic diagram of a communication system according to some embodiments of the present disclosure.
FIG. 2 is a flowchart of a screen-mirrored picture display method according to some embodiments of the present disclosure.
FIG. 3 is a flowchart of another screen-mirrored picture display method according to some embodiments of the present disclosure.
FIG. 4 is a flowchart of yet another screen-mirrored picture display method according to some embodiments of the present disclosure.
FIG. 5 is a flowchart of yet another screen-mirrored picture display method according to some embodiments of the present disclosure.
FIG. 6 is a flowchart of yet another screen-mirrored picture display method according to some embodiments of the present disclosure.
FIG. 7 is a schematic diagram of an example of display with screen mirroring according to some embodiments of the present disclosure.
FIG. 8 is a schematic diagram of an example of a screen mirroring interaction process according to some embodiments of the present disclosure.
FIG. 9 is a schematic diagram of an example of another screen mirroring interaction process according to some embodiments of the present disclosure.
FIG. 10 is a structural schematic diagram of a screen-mirrored picture display apparatus according to some embodiments of the present disclosure.
FIG. 11 is a structural schematic diagram of another screen-mirrored picture display apparatus according to some embodiments of the present disclosure.
FIG. 12 is a structural schematic diagram of a screen-mirrored picture display device according to some embodiments of the present disclosure.

### DETAILED DESCRIPTION

In order to enable those skilled in the art to better understand the technical solutions in the present disclosure, the technical solutions in the present disclosure will be described clearly and completely in conjunction with the accompanying drawings of the present disclosure. Obviously, the described embodiments are merely a part of the embodiments of the present disclosure, but not all of the embodiments of the present disclosure. All other embodiments obtained based on the embodiments of the present disclosure by an ordinary person of those skilled in the art without paying any creative effort shall belong to the protection scope of the present disclosure.

It should be noted that in the present disclosure, wordings, such as "exemplary/exemplarily" or "for example" and variations thereof are used to indicate examples, instances, or illustrations. Any embodiment or design solution described in the present disclosure with wordings such as "exemplary/exemplarily" or "for example" should not be illustrated as being more preferred or advantageous over other embodiments or design solutions in the present disclosure. Specifically, the usage of the wordings such as "exemplary/exemplarily" or "for example" is intended to present relevant concepts in a concrete way.

Hereinafter, terms such as "first" and "second" are used for descriptive purposes only, but are not to be understood as indicating or implying the relative importance or implicitly indicating the number of indicated technical features. Thus, features limited with wordings like "first" or "second," etc., may explicitly or implicitly include one or more of the feature(s).

In the description of the present disclosure, unless otherwise specified, a character "/" means an "or" relationship, for example, "A/B" may represent A or B. The "and/or" herein is merely an association relationship for describing associated objects, and used for indicating that there may be three relationships, for example, A and/or B may represent: only A; only B; or both A and B. In addition, "at least one" means a number of one or more, and "plurality" means a number of two or more.

Before describing a screen-mirrored picture display method provided in the embodiments of the present disclosure in detail, the implementation environment and application scenarios of the embodiments of the present disclosure are introduced first.

Firstly, an introduction will be given to the application scenarios of the embodiments of the present disclosure.

With the increasing popularity of mobile terminal devices, multi-device interaction systems are gradually becoming a new trend in industry development. To adapt to this market demand, technologies such as screen mirroring and application streaming emerge accordingly. Therefore, improving the quality of screen-mirrored pictures and expanding their application scenarios are particularly critical.

That is to say, with the rapid development of the digital media and entertainment industries, users have an increasing demand for movie and TV viewing experience. Besides traditional mobile phones, tablet computers and televisions, screen mirroring is gradually becoming a new choice for viewers to experience film and television works. The diversity and advanced functions of this screen mirroring method, such as screen mirroring from traditional video clients to televisions, to more integrated multi-screen collaboration technologies, are constantly expanding its application scope and depth.

Currently, multi-screen collaboration mainly uses video streaming for screen mirroring. This method is based on capturing each frame and dynamically transmitting it to a receiving end (sink end), then performing decoding through a decoder, and finally displaying the decoded picture on a SurfaceView. Although this method is technically feasible, no special processing or optimization is performed on the video itself.

That is to say, multi-screen collaboration technologies currently on the market mainly focus on realizing two-dimensional (2D) picture transmission and interaction. Although these technologies support users to display source end content in a window form on a sink end and allow operating the source end device on the sink end to achieve cross-device file transfer, they have some significant limitations. In particular, these technologies generally only provide a standard two-dimensional screen mirroring experience, thus appearing insufficient in terms of visual depth and richness. More importantly, because some technologies have limited response speed and data processing capabilities when handling highly dynamic and complex scenes, they encounter technical obstacles in ensuring smooth and synchronized multi-screen interactive experiences. This not only limits the improvement of user experience but also hinders the development of multi-screen technology in a wider range of application scenarios, especially in environments requiring high dynamics and interactivity.

To address the above problems, the embodiments of the present disclosure provide a screen-mirrored picture display method, and the screen-mirrored picture display method is applied in multi-screen collaboration scenarios. By replacing traditional screen mirroring surface controls, a glasses-free 3D algorithm is employed to generate new surface controls that have undergone 3D processing. The data thus processed is then input into an original decoder, thereby achieving a unique 3D display effect on the screen mirroring device. In addition to the improvement in display effect, a new human-computer interaction experience may be developed through eye position data captured by a camera. That is to say, in a multi-screen collaboration framework, the present disclosure may achieve efficient data transmission from a source device (e.g., a mobile phone) to a receiving device (e.g., a tablet computer), employing a glasses-free 3D algorithm to generate new surface controls that have undergone 3D processing, and the data thus processed is then input into an original decoder, thereby achieving a unique 3D display effect on the screen mirroring device and presenting content with a brand-new 3D visual effect. Thus, beyond simple picture transmission, by performing in-depth 3D processing and optimization on source data at the receiving end, an immersive viewing experience may be provided for users. Furthermore, upon processing glasses-free 3D images, the camera of the screen mirroring device, by capturing eye position data for a user and user limb movement data in real time, may extend human-computer interaction experience (e.g., adding somatosensory interaction) functions in many fields, especially the game field, allowing users to interact more realistically with 3D scenes.

It should be noted that the embodiments of the present disclosure may directly transmit 3D layout information of a mobile phone to a smart television or a television box, enabling the mobile phone to seamlessly cooperate with various Android devices, with a wide range of applications, providing users with an unprecedented visual interaction experience.

Below is an introduction to an implementation environment of the embodiments of the present disclosure.

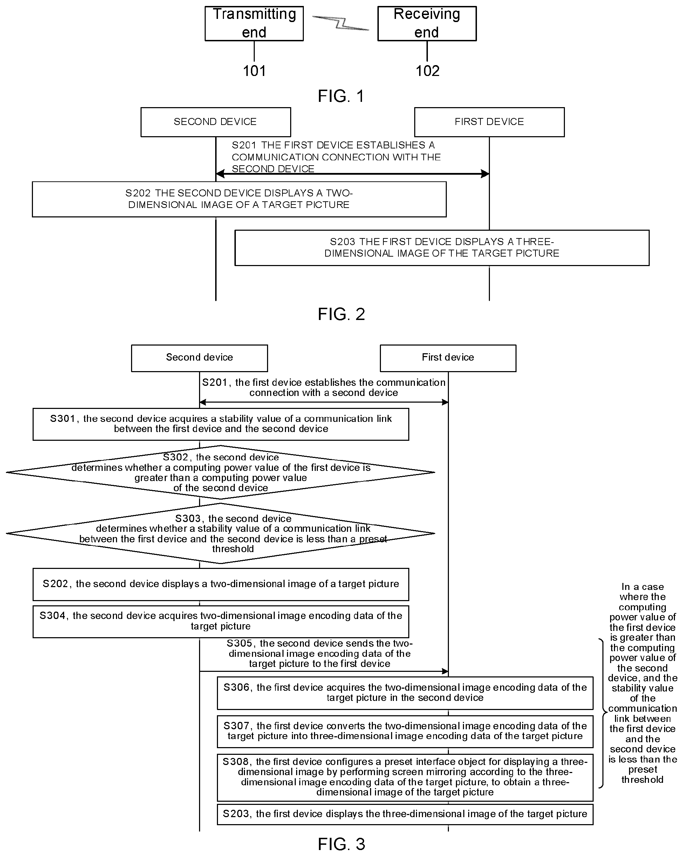

As shown in FIG. 1, FIG. 1 is a schematic diagram of a communication system provided in the embodiments of the present disclosure, the communication system may include: a second device (e.g., a transmitting end 101) and a first device (e.g., a receiving end 102).

The receiving end 102 may perform wired/wireless communication (e.g., Wi-Fi (Wireless Fidelity), or other short-range communication technologies, etc.) with the transmitting end 101, and the receiving end 102 has a display screen supporting glasses-free 3D display.

In the embodiments of the present disclosure, the transmitting end 101 may display a two-dimensional image of a picture to be screen-mirrored, and send two-dimensional image encoding data of the picture to be screen-mirrored to the receiving end 102. Then, the receiving end 102 may convert the two-dimensional image encoding data of the picture to be screen-mirrored into three-dimensional image encoding data of the picture to be screen-mirrored, and configure an interface object for displaying a three-dimensional image by performing screen mirroring according to the three-dimensional image encoding data of the picture to be screen-mirrored, thereby obtaining a three-dimensional image of the picture to be screen-mirrored. Thereafter, the receiving end 102 may display the three-dimensional image of the picture to be screen-mirrored.

In some embodiments, the receiving end 102 further has a camera. After the receiving end 102 receives the two-dimensional image encoding data of the picture to be screen-mirrored from the transmitting end 101, the receiving end 102 may collect eye position data for a user through the camera. Thereafter, in the process that the receiving end 102 converts the two-dimensional image encoding data of the picture to be screen-mirrored into the three-dimensional image encoding data of the picture to be screen-mirrored, the receiving end 102 may, based on the user's eye position data, provide a reference for a viewing angle during the conversion from the two-dimensional image to the three-dimensional image of the picture to be screen-mirrored, thereby obtaining the three-dimensional image encoding data of the picture to be screen-mirrored.

It should be noted that the embodiments of the present disclosure do not limit the picture to be screen-mirrored. For example, the picture to be screen-mirrored may be an application (APP) interface. For another example, the picture to be screen-mirrored may be a desktop icon. For yet another example, the picture to be screen-mirrored may be video content, game content, etc., of an APP.

It should be noted that an interface object represents a visual element with which a user interacts with a computer program. In the design and implementation of a graphical user interface, an interface object may be any visible or operable part, such as a button, a text box, a menu, a scroll bar, a window, a dialog box, etc. Moreover, in modern programming languages and frameworks, interface objects are typically encapsulated as classes or components, by instantiating these classes to create specific interface elements, and adjusting their behavior and appearance as needed, thereby building rich and diverse application program interfaces.

It should be noted that, in the embodiments of the present disclosure, the transmitting end 101 may be a mobile phone with a transceiving function, a tablet computer, a desktop computer, a laptop computer, a handheld computer, a notebook computer, an ultra-mobile personal computer (UMPC), a netbook, etc., and a specific shape and form of the transmitting end 101 is not particularly limited in the embodiments of the present disclosure. The transmitting end 101 may interact with a user through one or more manners such as keyboard, touchpad, touch screen, remote controller, voice interaction, or handwriting device, etc.

After introducing the application scenarios and the implementation environment of the embodiments of the present disclosure, the following provides a detailed introduction to the screen-mirrored picture display method provided in the embodiments of the present disclosure in conjunction with the above implementation environment.

The embodiments of the present disclosure provide a screen-mirrored picture display method. As shown in FIG. 2, the screen-mirrored picture display method may include: S201-S203.

In S201, a first device establishes a communication connection with a second device.

In one implementation, a second device has a screen mirroring function for screen mirroring a picture to other devices. The second device may, in response to a user's activating operation on the screen mirroring function, acquire identifiers of a plurality of devices to be screen-mirrored within a preset range, where the plurality of devices to be screen-mirrored include a first device. Then, the second device may, in response to a user's operation (e.g., a click operation, an input operation, etc.) on an identifier of the first device, establish a communication connection with the first device.

It should be noted that the embodiments of the present disclosure do not limit an identifier of a device. For example, the identifier of the device may be a name of the device. For another example, the identifier of the device may be a serial number of the device. For yet another example, the identifier of the device may be a network address of the device.

In the embodiments of the present disclosure, the first device also has the screen mirroring function. Before the second device establishes the communication connection with the first device, the second device may, in response to the user's operation on the identifier of the first device, send a first message for notifying to start screen mirroring to the first device. Then, the first device may, in response to the first message from the second device, activate the screen mirroring function and run a bus service of the screen mirroring function, so that the bus service of the screen mirroring function in the second device and the bus service of the screen mirroring function in the first device are simultaneously in a running state, the second device and the first device mutually establish a screen mirroring connection, and thus the communication connection between the first device and the second device is established.

In S202, the second device displays a two-dimensional image of a target picture.

In one implementation, the second device stores a plurality of objects to be screen-mirrored. The second device may, in response to a user's operation (e.g., a click operation) on a target object among the plurality of objects to be screen-mirrored, run the target object, and acquire two-dimensional image encoding data of a target picture during running of the target object, and then locally display a two-dimensional image of the target picture according to the two-dimensional image encoding data of the target picture.

That is to say, the target picture is a real-time view picture of the target object in a running state.

It should be noted that the embodiments of the present disclosure do not limit the target object. For example, the target object may be an APP in the device. For another example, the target object may be a system desktop in the device. For yet another example, the target object may be a document file, a video file, etc., in the device.

In the embodiments of the present disclosure, the second device may include a display screen for displaying a picture image and a first interface object with a two-dimensional display effect. The second device may invoke the first interface object in the display screen, and configure the first interface object in the display screen according to the two-dimensional image encoding data of the target picture to obtain the two-dimensional image of the target picture, and then display the two-dimensional image of the target picture through the display screen.

It should be noted that, for the process of the second device configuring the first interface object in the display screen according to the two-dimensional image encoding data of the target picture, reference may be made to the introduction of configuring an interface object in some technologies, which will not be described in detail herein.

In some embodiments, after establishing the screen mirroring connection with the first device, the second device may, in response to the user's operation on the target object among the plurality of objects to be screen-mirrored, inquire the user about a screen mirroring display effect for the target picture by displaying a prompt box including a three-dimensional display button and a two-dimensional display button. Then, the second device may, in response to the user's click operation on the three-dimensional display button in the prompt box, generate a screen mirroring operation instruction, and send the screen mirroring operation instruction to the first device, where the screen mirroring operation instruction is used to indicate the first device to display a three-dimensional image of the target picture by performing screen mirroring. Thereafter, the first device may execute S203 in response to the screen mirroring operation instruction from the second device.

In S203, the first device displays a three-dimensional image of the target picture.

In one implementation, the first device may include a display screen for displaying a picture image and a second interface object for displaying an image by performing screen mirroring. The first device may, in response to the screen mirroring operation instruction from the second device, activate the display screen and invoke the second interface object. Thereafter, the first device may acquire image encoding data of the target picture in the second device, and configure the second interface object in the display screen according to the image encoding data of the target picture to obtain a three-dimensional image of the target picture, and display the three-dimensional image of the target picture through the display screen by performing screen-mirroring.

In the embodiments of the present disclosure, the three-dimensional image of the target picture is obtained by the first device or the second device performing conversion processing on the two-dimensional image of the target picture based on the screen mirroring operation instruction.

In a case where the three-dimensional image of the target picture is obtained by the second device performing conversion processing on the two-dimensional image of the target picture based on the screen mirroring operation instruction, the second interface object is an interface object with a two-dimensional display effect, and the image encoding data of the target picture is three-dimensional image encoding data.

In a case where the three-dimensional image of the target picture is obtained by the first device performing conversion processing on the two-dimensional image of the target picture based on the screen mirroring operation instruction, the second interface object is a preset interface object for displaying a three-dimensional image (i.e., an interface object with a three-dimensional display effect) by performing screen mirroring, and the image encoding data of the target picture is two-dimensional image encoding data.

It may be understood that the second device establishes the communication connection with the first device, and sends to the first device the screen mirroring operation instruction for indicating the first device to display a three-dimensional image of the picture to be screen-mirrored in the second device, so that in a case where the second device displays a two-dimensional image of the picture to be screen-mirrored, the first device displays a three-dimensional image of the picture to be screen-mirrored. The three-dimensional image of the picture to be screen-mirrored is obtained by the first device or the second device performing conversion processing on the two-dimensional image of the picture to be screen-mirrored based on the screen mirroring operation instruction. In this way, dimension conversion of a screen-mirrored picture in multi-screen collaboration may be realized, improving user's screen mirroring experience.

In some embodiments, the first device and the second device may, based on spare computing power resources of both the first device and the second device and the stability degree of a communication link therebetween, determine that the two-dimensional image of the target picture is subjected to conversion processing by any one of the first device and the second device, thereby implementing conversion processing on the two-dimensional image of the target picture to obtain the three-dimensional image of the target picture.

It should be noted that, in the process of determining that the two-dimensional image of the target picture is subjected to conversion processing by any one of the first device and the second device, the conversion processing of the two-dimensional image of the target picture may be determined by the second device, or the conversion processing of the two-dimensional image of the target picture may be determined by the first device.

The following takes the second device as an example, and introduces the process of determining that the two-dimensional image of the target picture is subjected to conversion processing by any one of the first device and the second device in conjunction with a specific example.

In the embodiments of the present disclosure, in the above S201, the second device may acquire a computing power value of the second device and a computing power value of the first device. The computing power value of the second device is used to indicate spare computing power resources in the second device, and the computing power value of the first device is used to indicate spare computing power resources in the first device.

In one implementation, the second device may acquire the spare computing power resources in the second device, and determine the computing power value of the second device according to the spare computing power resources in the second device.

In one implementation, the first message may include first information for querying computing power resources. The second device sends the first message including the first information to the first device, so that the first device, in response to the first information in the first message, acquires the spare computing power resources in the first device, and determines the computing power value of the first device according to the spare computing power resources in the first device. Thereafter, the first device may feed back a callback notification carrying the computing power value of the first device to the second device, so that the second device may acquire the computing power value of the first device from the callback notification from the first device.

It should be noted that, in the embodiments of the present disclosure, the computing power value of a device is proportional to its spare computing power resources. That is to say, a device with a larger computing power value has more spare computing power resources; a device with a smaller computing power value has fewer spare computing power resources.

In the embodiments of the present disclosure, as shown in FIG. 3, after S201, the screen-mirrored picture display method may further include: S301-S308.

In S301, the second device acquires a stability value of a communication link between the first device and the second device.

The stability value of the communication link between the first device and the second device is used to indicate a stability degree of the communication link between the first device and the second device.

It should be noted that, in the embodiments of the present disclosure, the stability value of a communication link is proportional to its stability degree. That is to say, a communication link with a larger stability value has a better stability degree; a communication link with a smaller stability value has a worse stability degree.

In the embodiments of the present disclosure, the stability value of the communication link between the first device and the second device may be any one of the following parameter values: a bit error rate, a packet loss rate, a path loss value, an effective isotropic radiated power, etc.

In one implementation, the second device may monitor or periodically test the communication link with the first device in real time, and determine the stability value of the communication link with the first device through statistical analysis and a prediction algorithm, thereby acquiring the stability value of the communication link with the first device.

In S302, the second device determines whether a computing power value of the first device is greater than a computing power value of the second device.

In S303, the second device determines whether a stability value of a communication link between the first device and the second device is less than a preset threshold.

In one implementation, the second device stores a preset threshold, and the second device may compare the stability value of the communication link between the first device and the second device determined by the second device with the stored preset threshold, to determine whether the stability value of the communication link between the first device and the second device is less than the preset threshold.

In some embodiments, upon the second device determining that the computing power value of the first device is greater than the computing power value of the second device, and the stability value of the communication link between the first device and the second device is less than the preset threshold, the second device determines that the two-dimensional image of the target picture is subjected to conversion processing by the first device, and after S202, S304 is performed.

In S304, the second device acquires two-dimensional image encoding data of the target picture.

In one implementation, the second device may perform data acquisition on the displayed two-dimensional image of the target picture to obtain the two-dimensional image encoding data of the target picture.

In S305, the second device sends the two-dimensional image encoding data of the target picture to the first device.

In S306, the first device acquires the two-dimensional image encoding data of the target picture in the second device.

In the embodiments of the present disclosure, the first device receives the two-dimensional image encoding data of the target picture from the second device, so as to acquire the two-dimensional image encoding data of the target picture in the second device.

In S307, the first device converts the two-dimensional image encoding data of the target picture into three-dimensional image encoding data of the target picture.

In one implementation, a camera is deployed in the first device. In the process that the first device converts the two-dimensional image encoding data of the target picture into the three-dimensional image encoding data of the target picture, the first device may collect eye position data for a user within a field of view through the camera, and convert the two-dimensional image encoding data of the target picture into the three-dimensional image encoding data of the target picture according to the eye position data. The eye position data is used to provide a reference for a viewing angle for the three-dimensional image during the dimension conversion process of the picture.

It should be noted that, for the process of the first device converting the two-dimensional image encoding data of the target picture into the three-dimensional image encoding data of the target picture, reference may be made to the introduction of converting two-dimensional image encoding data into three-dimensional image encoding data in some technologies, which will not be described in detail herein.

In S308, the first device configures a preset interface object for displaying a three-dimensional image by performing screen mirroring according to the three-dimensional image encoding data of the target picture, to obtain a three-dimensional image of the target picture.

In one implementation, a 3D control is deployed in the first device, and the 3D control includes a preset interface object (i.e., a 3D interface object). The first device may invoke the preset interface object from the 3D control for the display screen of the first device, to replace an initial interface object in the first device used for displaying a two-dimensional image. Thereafter, the first device may configure the preset interface object in the display screen according to the three-dimensional image encoding data of the target picture, thereby obtaining the three-dimensional image of the target picture.

In the embodiments of the present disclosure, after the first device obtains the three-dimensional image of the target picture, the first device may perform S203 through the preset interface object in the display screen.

It may be understood that, in a case where the computing power capability of the first device itself is higher than the computing power capability of the second device, and the communication link between the first device and the second device is unstable, the three-dimensional image of the picture to be screen-mirrored is obtained by the first device performing conversion processing on the two-dimensional image of the picture to be screen-mirrored based on the screen mirroring operation instruction. In this way, the computing power for dimension conversion of the second device may be migrated to the first device, reducing the computing power load of the second device during the screen mirroring process.

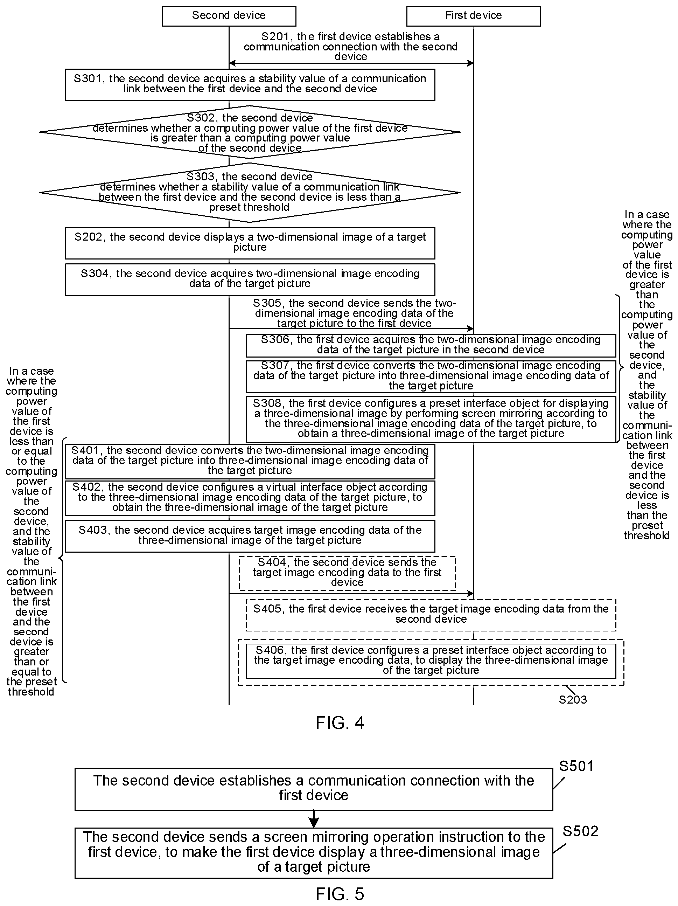

In other embodiments, as shown in FIG. 4, after S302 and S303, if the second device determines that the computing power value of the first device is less than or equal to the computing power value of the second device, and the stability value of the communication link between the first device and the second device is greater than or equal to the preset threshold, the second device determines that the two-dimensional image of the target picture is subjected to conversion processing by the second device, and after S304, the second device may obtain the three-dimensional image of the target picture through the following S401-S402.

In S401, the second device converts the two-dimensional image encoding data of the target picture into three-dimensional image encoding data of the target picture.

In one implementation, the second device may, through interaction with the first device, acquire eye position data for a user collected by the first device, and convert the two-dimensional image encoding data of the target picture into the three-dimensional image encoding data of the target picture according to the eye position data.

In some embodiments, the second device may send a second message for requesting the eye position data for the user to the first device, so that the first device, in response to the second message, collects the user's eye position data within the field of view through the camera, and feeds back a callback notification carrying the user's eye position data to the second device, thereby enabling the second device to acquire the user's eye position data from the callback notification from the first device.

In S402, the second device configures a virtual interface object according to the three-dimensional image encoding data of the target picture, to obtain the three-dimensional image of the target picture.

In one implementation, a 3D control is deployed in the second device, and the 3D control includes a virtual interface object for displaying a three-dimensional image in a virtual screen (i.e., a 3D interface object). The second device may create a virtual screen in a background space, and invoke the virtual interface object from the 3D control for the virtual screen, to replace an initial interface object in the second device used for displaying a two-dimensional image. Thereafter, the second device may configure the virtual interface object in the virtual screen according to the three-dimensional image encoding data of the target picture, to obtain the three-dimensional image of the target picture.

In the embodiments of the present disclosure, after the second device obtains the three-dimensional image of the target picture, the second device and the first device may perform the following S403-S406, so that the first device performs S203.

In S403, the second device acquires target image encoding data of the three-dimensional image of the target picture.

In one implementation, after the second device obtains the three-dimensional image of the target picture, the second device may display the three-dimensional image of the target picture through the virtual interface object in the virtual screen, and perform data acquisition on the three-dimensional image of the target picture displayed in the virtual screen to obtain the target image encoding data.

In S404, the second device sends the target image encoding data to the first device.

In S405, the first device receives the target image encoding data from the second device.

In the embodiments of the present disclosure, S203 may include: S406.

In S406, the first device configures a preset interface object according to the target image encoding data, to display the three-dimensional image of the target picture.

In one implementation, the first device may configure the preset interface object according to the target image encoding data to obtain the three-dimensional image of the target picture, and display the three-dimensional image of the target picture through the preset interface object in the display screen.

In some embodiments, the first device may configure an initial interface object in the first device according to the target image encoding data, to obtain the three-dimensional image of the target picture, and display the three-dimensional image of the target picture through the initial interface object in the display screen.

It may be understood that, in a case where the computing power capability of the first device itself is lower than the computing power capability of the second device, and the communication link between the first device and the second device is relatively stable, the three-dimensional image of the picture to be screen-mirrored is obtained by the second device performing conversion processing on the two-dimensional image of the picture to be screen-mirrored based on the screen mirroring operation instruction. In this way, it can be ensured that the first device may display the three-dimensional image of the picture to be screen-mirrored in a timely manner.

In some embodiments, if the second device determines that the computing power value of the first device is greater than the computing power value of the second device, and the stability value of the communication link between the first device and the second device is greater than or equal to the preset threshold, the second device may inquire the user about a device for performing conversion processing on the two-dimensional image of the target picture by displaying a prompt box including an identifier of the first device and an identifier of the second device. Thereafter, the second device may, in response to the user's operation (e.g., a click operation, an input operation, etc.) on the identifier of the second device (or the identifier of the first device) in the prompt box, determine that the two-dimensional image of the target picture is subjected to conversion processing by the device indicated by the operation.

In some embodiments, after the second device displays the prompt box, the second device may, through timing, determine whether the user's operation on the device identifier in the prompt box is received within a preset time.

If the second device determines that the user's operation on the device identifier in the prompt box is received within the preset time, the second device determines that the two-dimensional image of the target picture is subjected to conversion processing by the device indicated by the operation.

If the second device determines that the user's operation on the device identifier in the prompt box is not received within the preset time, the second device may determine that the two-dimensional image of the target picture is subjected to conversion processing by a default device among the first device and the second device. The default device may be a transmitting end (e.g., the second device) in the screen mirroring process, or the default device may be a receiving end (e.g., the first device) in the screen mirroring process.

Similarly, if the second device determines that the computing power value of the first device is less than or equal to the computing power value of the second device, and the stability value of the communication link between the first device and the second device is less than the preset threshold, the second device may inquire the user about a device for performing conversion processing on the two-dimensional image of the target picture by displaying a prompt box including an identifier of the first device and an identifier of the second device. Thereafter, the second device may, in response to the user's operation (e.g., a click operation, an input operation, etc.) on the identifier of the second device (or the identifier of the first device) in the prompt box, determine that the two-dimensional image of the target picture is subjected to conversion processing by the device indicated by the operation.

It may be understood that, in the process of the second device performing screen mirroring to the first device to display pictures, by adding manual determination of the device for performing conversion processing on the picture, the operability of the screen mirroring display may be improved.

In some embodiments, a preset whitelist is stored in the second device, and the preset whitelist includes identifiers of a plurality of preset objects that are allowed to perform screen mirroring. After the second device establishes the communication connection with the first device, the second device may determine whether to perform screen projection on the target picture to display a picture by judging whether the identifier of a target object is included in the preset whitelist.

In one implementation, upon the second device determining that the identifier of the target object is included in the preset whitelist, the second device may send the screen mirroring operation instruction to the first device.

In one implementation, upon the second device determining that the identifier of the target object is not included in the preset whitelist, the second device may not send the screen mirroring operation instruction to the first device, and display a prompt box for indicating that the target object is not authorized for screen mirroring.

It may be understood that, by authenticating screen mirroring objects through the whitelist, authorized objects are allowed to perform screen mirroring for displaying. In this way, the security of the screen mirroring for displaying may be improved.

The following introduces the screen-mirrored picture display method provided in the embodiments of the present disclosure by taking the second device as an execution subject. As shown in FIG. 5, the screen-mirrored picture display method may include: S501-S502.

In S501, the second device establishes a communication connection with the first device.

It should be noted that, for the process of the second device establishing the communication connection with the first device, reference may be made to the introduction of the second device establishing the communication connection with the first device in the above S201, which will not be described in detail herein.

In some embodiments, after the second device establishes the communication connection with the first device, the second device may perform S502.

In S502, the second device sends a screen mirroring operation instruction to the first device, to make the first device display a three-dimensional image of a target picture.

It should be noted that, for the process of the second device sending the screen mirroring operation instruction to the first device to make the first device display the three-dimensional image of the target picture, reference may be made to the process of S301-S406 in the embodiments shown in FIG. 4, which will not be described in detail herein.

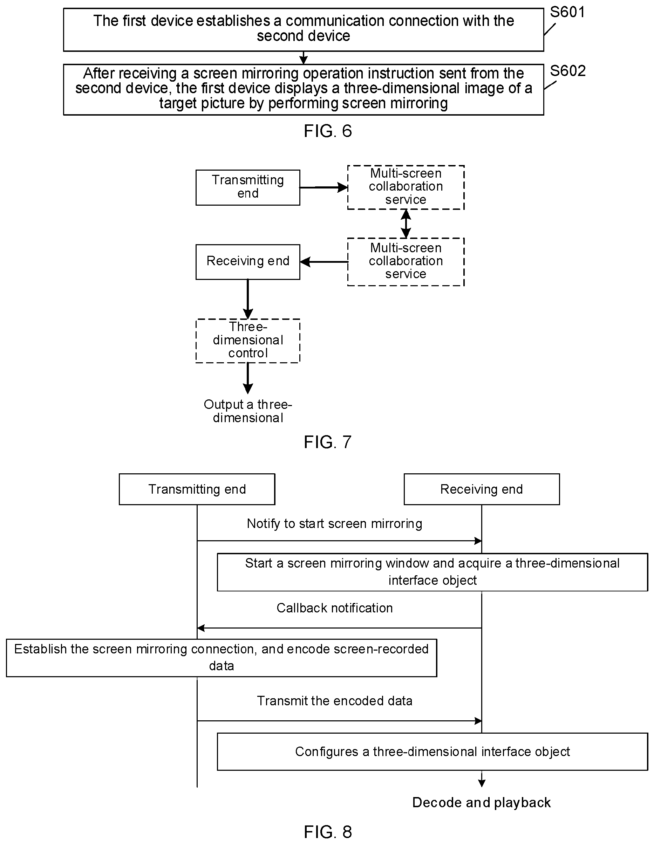

The following introduces the screen-mirrored picture display method provided in the embodiments of the present disclosure by taking the first device as an execution subject. As shown in FIG. 6, the screen-mirrored picture display method may include: S601-S602.

In S601, the first device establishes a communication connection with the second device.

It should be noted that, for the process of the first device establishing the communication connection with the second device, reference may be made to the introduction of the second device establishing the communication connection with the first device in the above S201, which will not be described in detail herein.

In S602, after receiving a screen mirroring operation instruction sent from the second device, the first device displays a three-dimensional image of a target picture by performing screen mirroring.

It should be noted that, for the process of the first device, after receiving the screen mirroring operation instruction sent from the second device, displaying the three-dimensional image of the target picture by performing screen mirroring, reference may be made to the process of S306-S308 or S405-S406 in the embodiments shown in FIG. 4, which will not be described in detail herein.

It may be understood that, in a case where the second device displays a two-dimensional image of a screen-mirrored picture, the first device may obtain three-dimensional image encoding data of the screen-mirrored picture by performing conversion processing on two-dimensional image encoding data of the screen-mirrored picture, and then display a three-dimensional image of the screen-mirrored picture according to the three-dimensional image encoding data of the screen-mirrored picture. In this way, dimension conversion of a screen-mirrored picture in multi-screen collaboration may be realized, improving user's screen mirroring experience.

In combination with the above introduction that the second device determines that the two-dimensional image of the target picture is subjected to conversion processing by any one of the second device and the first device, the following takes the first device as an example, and introduces the process of determining that the two-dimensional image of the target picture is subjected to conversion processing by any one of the first device and the second device in conjunction with a specific example.

In the embodiments of the present disclosure, before the first device establishes the communication connection with the second device, the first device may acquire the computing power value of the second device and the computing power value of the first device.

In one implementation, the first device may receive the first message including first information from the second device, and in response to the first information in the first message, acquire the spare computing power resources in the first device, and determine the computing power value of the first device according to the spare computing power resources in the first device.

In some embodiments, before the second device sends the first message to the first device, the second device determines the computing power value of the second device by acquiring the spare computing power resources in the second device. Thereafter, in a case where the second device sends the first message to the first device, the second device may add the computing power value of the second device in the first message, so that the first device acquires the computing power value of the second device from the first message from the second device.

In the embodiments of the present disclosure, with reference to the process of the second device performing S301-S303, the first device may acquire the stability value of the communication link between the first device and the second device, and determine whether the computing power value of the first device is greater than the computing power value of the second device, whether the stability value of the communication link between the first device and the second device is less than a preset threshold, and then determine a device that performs conversion processing on the two-dimensional image of the target picture among the first device and the second device.

In one implementation, upon the first device determining that the two-dimensional image of the target picture is subjected to conversion processing by the first device, the first device may send a third message for requesting encoding data of the two-dimensional image of the target picture to the second device, so that the second device, in response to the third message, performs the above S304-S305, and then the first device performs S306-S308 to obtain the three-dimensional image of the target picture.

In one implementation, upon the first device determining that the two-dimensional image of the target picture is subjected to conversion processing by the second device, the first device may send a third message for requesting encoding data of the three-dimensional image of the target picture to the second device, so that the second device, in response to the third message, performs the above S304-S402 to obtain the three-dimensional image of the target picture.

In the embodiments of the present disclosure, the second device performs the above S403-S404, so that the first device acquires the target encoding data of the three-dimensional image of the target picture by performing S405, and displays the three-dimensional image of the target picture by performing S406.

The following introduces the screen-mirrored picture display method provided in the embodiments of the present disclosure in conjunction with a specific example. As shown in FIG. 7, a transmitting end establishes a Wi-Fi Peer-to-Peer (Wi-Fi P2P) connection with a multi-screen collaboration service of a receiving end through a multi-screen collaboration service of the transmitting end, so that the receiving end receives a picture to be screen-mirrored from the transmitting end through the multi-screen collaboration service, and outputs a three-dimensional image of the picture to be screen-mirrored through a three-dimensional control in the receiving end.

Exemplarily, taking an Android system as an example, FIG. 8 illustrates a screen mirroring interaction process between a transmitting end and a receiving end.

The transmitting end notifies the receiving end to start screen mirroring. The transmitting end and the receiving end transmit basic device information (i.e., a computing power value of a device) through remote procedure call (RPC) communication, the receiving end transmits back to the transmitting end through a callback, and starts a bus service to prepare for establishing a screen mirroring connection. Then, after the receiving end receives the notification from the transmitting end to start screen mirroring, it starts a screen mirroring window and acquires a three-dimensional interface object.

At this moment, the receiving end determines the interface object to be used according to a judgment result of the transmitting end on a screen mirroring application. If the screen mirroring application is an application within a whitelist, an interface object originally provided in the system is replaced with a three-dimensional interface object in the 3D control.

In some embodiments, if the screen mirroring application is an application outside the whitelist, an interface object originally provided in the system (e.g., an ordinary Surface) is acquired.

Thereafter, after the screen mirroring window is prepared, the receiving end may again send a callback notification that the screen mirroring window is prepared to the transmitting end, so that the transmitting end and the receiving end establish the screen mirroring connection, start screen recording and encoding a picture of the screen mirroring application, and transmit the encoded data to the receiving end through a non-unique communication method.

The receiving end configures the previously acquired three-dimensional interface object in a decoder based on the data transmitted from the transmitting end, and performs decoding and playback.

At this moment, if the interface object configured in the decoder is a 3D interface object in the 3D control, the played picture has been subjected to 3D processing by the 3D interface object, and thus a 3D effect may be displayed.

In some embodiments, if the interface object configured in the decoder is an interface object originally provided in the system, the played picture is not subjected to 3D processing, and thus a 3D effect cannot be displayed.

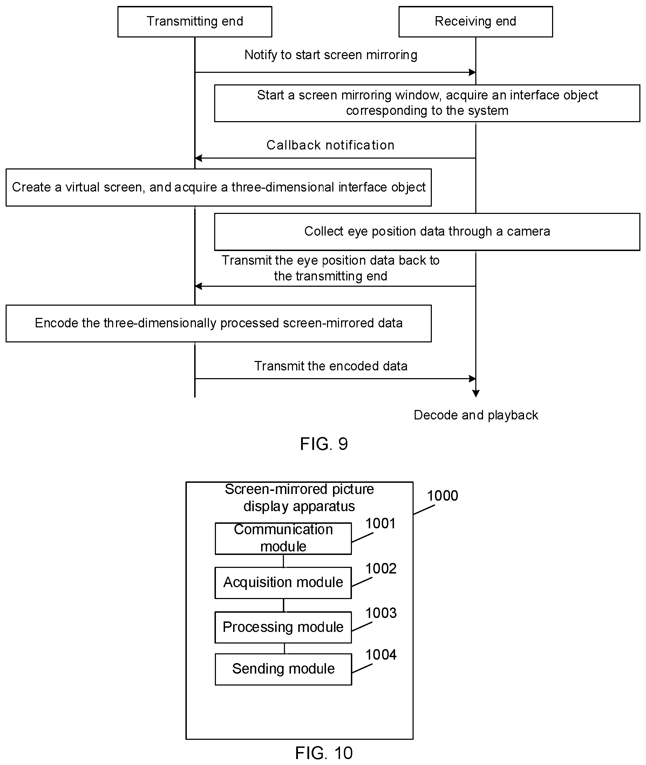

In some embodiments, FIG. 9 illustrates another screen mirroring interaction process between a transmitting end and a receiving end, enabling the receiving end to migrate the computing power for 3D processing to the transmitting end.

The transmitting end notifies the receiving end to start screen mirroring. The transmitting end and the receiving end transmit basic device information (i.e., a computing power value of a device) through RPC communication, the receiving end transmits back to the transmitting end through a callback, and starts a bus service to prepare for establishing a screen mirroring connection. Then, after the receiving end receives the notification from the transmitting end to start screen mirroring, it starts the screen mirroring window, acquires an interface object corresponding to the system, and sends a callback notification that the screen mirroring window is prepared to the transmitting end.

Thereafter, the transmitting end may determine a picture dimension of the screen mirroring application displayed on the receiving end by judging whether the screen mirroring application is within a whitelist, and send screen-mirrored data of the corresponding dimension to the receiving end.

If the screen mirroring application is an application outside the whitelist, the transmitting end determines that the picture dimension of the screen mirroring application displayed on the receiving end is two-dimensional, directly performs encoding operation on a screen-mirrored picture of the screen mirroring application, and then transmits encoded data to the receiving end, so that the receiving end performs decoding to play a 2D picture of the screen mirroring application.

If the screen mirroring application is an application within the whitelist, the transmitting end determines that the picture dimension of the screen mirroring application displayed on the receiving end is three-dimensional, and creates a virtual screen. Then, the transmitting end replaces the interface object originally provided in the system with a three-dimensional interface object, and at the same time, the receiving end collects eye position data through a camera, and transmits the eye position data back to the transmitting end, so that the transmitting end acquires the eye position data. Thereafter, the transmitting end, according to the eye position data captured by the camera, plays on the virtual screen configured with the three-dimensional interface object, encodes the three-dimensionally processed screen-mirrored data, and transmits the encoded data to the receiving end, so that the receiving end performs decoding to play the transmitted data, displaying a 3D effect.

It should be noted that FIG. 8 and FIG. 9 list two solutions, the solution of FIG. 8 has lower requirements on communication quality but higher requirements on hardware of the receiving end. The solution of FIG. 9 has lower requirements on hardware of the receiving end but higher requirements on hardware of the transmitting end and Wi-Fi communication quality. The present disclosure automatically determines which solution to adopt according to on-site device information. If hardware levels of the transmitting end and the receiving end are equivalent, the solution of FIG. 8 is preferentially adopted to ensure less data transmission as much as possible.

In summary, the present disclosure may screen mirror various types of display contents (such as APP interfaces, operating system interfaces, videos, games, etc.) on a source end to a sink end to display glasses-free 3D pictures. Moreover, the present disclosure may especially be applied to certain mobile game scenarios, displaying a glasses-free 3D effect on a large-screen device through screen mirroring from a mobile phone and performing realistic somatosensory interaction, providing users with an interactive and immersive 3D experience. That is to say, the present disclosure exhibits significant advantages in improving user experience. The present disclosure not only supports standard multi-screen collaboration functions but also introduces glasses-free 3D technology, which means that the user may enjoy a stereoscopic 3D visual experience on a sink-end device without any additional 3D glasses. On the large-screen device, not only can 3D content projected from the mobile phone be viewed, but also the mobile phone can be directly operated, and some somatosensory games can even perform somatosensory interaction through position data captured by a camera of the large-screen device. Thus, an interactive and immersive 3D experience is provided for users.

It can be understood that, in order to implement the above functions, the screen-mirrored picture display apparatus includes corresponding hardware structures and/or software modules for implementing various functions. Those skilled in the art should easily realize that the present disclosure may be implemented in the form of hardware or a combination of hardware and computer software in combination with algorithms and steps of various examples described in the embodiments of the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The screen-mirrored picture display apparatus may be divided into functional modules according to the above-mentioned method embodiments in the embodiments of the present disclosure. For example, each functional module may be divided corresponding to each function, or two or more functions may be integrated into one functional module. The above-mentioned integrated module may implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

FIG. 10 is a structural schematic diagram of a screen-mirrored picture display apparatus provided in the embodiments of the present disclosure. The screen-mirrored picture display apparatus 1000 may execute the method executed by the second device in the screen-mirrored picture display methods shown in FIG. 2, FIG. 3 and FIG. 4. As shown in FIG. 10, the screen-mirrored picture display apparatus 1000 includes: a communication module 1001.

The communication module 1001 is configured to, after establishing a communication connection with a first device, send a screen mirroring operation instruction to the first device, to make the first device display a three-dimensional image of a target picture by performing screen mirroring. The screen mirroring operation instruction is used to indicate the first device to display the three-dimensional image of the target picture by performing screen mirroring. The three-dimensional image of the target picture is obtained by the first device or the second device performing conversion processing on a two-dimensional image of the target picture based on the screen mirroring operation instruction.

In some embodiments, in response to a computing power value of the first device being less than or equal to a computing power value of the second device, and a stability value of a communication link between the first device and the second device being greater than or equal to a preset threshold, the three-dimensional image of the target picture is obtained by the second device performing conversion processing on the two-dimensional image of the target picture.

In some embodiments, the screen-mirrored picture display apparatus 100 further includes: an acquisition module 1002 and a processing module 1003. The acquisition module 1002 is configured to acquire two-dimensional image encoding data of the target picture. The processing module 1003 is configured to convert the two-dimensional image encoding data of the target picture into three-dimensional image encoding data of the target picture. The processing module 1003 is further configured to configure a virtual interface object according to the three-dimensional image encoding data of the target picture, to obtain the three-dimensional image of the target picture.

In some embodiments, the acquisition module 1002 is further configured to acquire eye position data for a user collected by the first device, where the eye position data is used to provide a reference for a viewing angle for the three-dimensional image during a dimension conversion process of a picture. The processing module 1003 is configured to convert the two-dimensional image encoding data of the target picture into the three-dimensional image encoding data of the target picture according to the eye position data.

In some embodiments, the screen-mirrored picture display apparatus 1000 further includes: a sending module 1004. The acquisition module 1002 is further configured to acquire target image encoding data of the three-dimensional image of the target picture. The sending module 1004 is configured to send the target image encoding data to the first device, to make the first device display the three-dimensional image of the target picture according to the target image encoding data.

In some embodiments, the processing module 1003 is further configured to determine whether a target object corresponding to the target picture is included in a preset whitelist. The sending module 1004 is further configured to, in response to the preset whitelist including the target object, send the screen mirroring operation instruction to the first device.

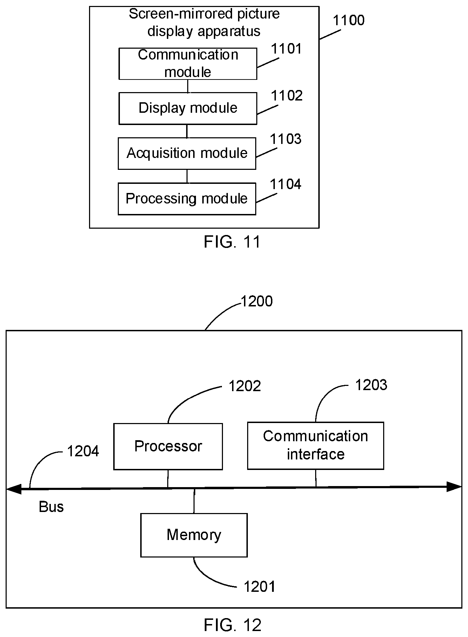

FIG. 11 is a structural schematic diagram of a screen-mirrored picture display apparatus provided in the embodiments of the present disclosure. The screen-mirrored picture display apparatus 1100 may execute the method executed by the first device in the screen-mirrored picture display methods shown in FIG. 2, FIG. 3 and FIG. 4. As shown in FIG. 11, the screen-mirrored picture display apparatus 1100 includes: a communication module 1101 and a display module 1102.

The communication module 1101 is configured to establish a communication connection with a second device. The display module 1102 is configured to, after receiving a screen mirroring operation instruction sent from the second device, display a three-dimensional image of a target picture by performing screen mirroring. The three-dimensional image of the target picture is obtained by the first device or the second device performing conversion processing on a two-dimensional image of the target picture based on the screen mirroring operation instruction, and the screen mirroring operation instruction is used to indicate the first device to display the three-dimensional image of the target picture by performing screen mirroring.

In some embodiments, in response to a computing power value of the first device being greater than a computing power value of the second device, and a stability value of a communication link between the first device and the second device being less than a preset threshold, the three-dimensional image of the target picture is obtained by the first device performing conversion processing on the two-dimensional image of the target picture.

In some embodiments, the screen-mirrored picture display apparatus 1100 further includes: an acquisition module 1103 and a processing module 1104. The acquisition module 1103 is configured to acquire two-dimensional image encoding data of the target picture in the second device. The processing module 1104 is configured to convert the two-dimensional image encoding data of the target picture into three-dimensional image encoding data of the target picture. The processing module 1104 is further configured to configure a preset interface object for displaying a three-dimensional image by performing screen mirroring according to the three-dimensional image encoding data of the target picture, to obtain the three-dimensional image of the target picture.

In some embodiments, the acquisition module 1103 is further configured to collect eye position data for a user, where the eye position data is used to provide a reference for a viewing angle for the three-dimensional image during a dimension conversion process of the picture. The processing module 1104 is configured to convert the two-dimensional image encoding data of the target picture into the three-dimensional image encoding data of the target picture according to the eye position data.

In a case where the functions of the above-mentioned integrated modules are implemented in the form of hardware, structures of another network device of the screen-mirrored picture display apparatus involved in the above-mentioned embodiments is provided in the embodiments of the present disclosure. As shown in FIG. 12, the screen-mirrored picture display device 1200 includes: a memory 1201, a processor 1202, a communication interface 1203, and a bus 1204.

The memory 1201 may be a read-only memory (ROM) or other types of static storage devices that can store static information and instructions, a random access memory (RAM), or other types of dynamic storage devices that can store dynamic information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The processor 1202 may be a logic block, a module, or a circuit that implements or perfroms various exemplary methods described in combination with the embodiments of the present disclosure. The processor 1202 may be a central processor, a general-purpose processor, a digital signal processor, an application specific integrated circuit, a field programmable gate array, or other programmable logic component, a transistor logic component, a hardware assembly, or any combination thereof. The processor 1202 may also implement or execute various illustrative logical blocks, modules and circuits described in conjunction with the embodiments of the present disclosure. The processor 1202 may also be a combination that implements computing functions, such as a combination containing one or more microprocessors, a combination of a DSP (digital signal processor) and a microprocessor, etc.

The communication interface 1203 is configured to connect to other devices through a communication network. The communication network may be the Ethernet, a radio access network, a wireless local area network (WLAN), or the like.

In one implementation, the memory 1201 may exist independently from the processor 1202, and the memory 1201 may be connected to the processor 1202 through the bus 1204 for storing instructions or program codes. In a case where the processor 1202 invokes and executes instructions or program codes stored in the memory 1201, the screen-mirrored picture display method provided in the embodiments of the present disclosure may be implemented.

In one implementation, the memory 1201 may also be integrated with the processor 1202.

The bus 1204 may be an extended industry standard architecture (EISA) bus, or the like. The bus 1204 may be classified as an address bus, a data bus, a control bus, or the like. For ease of representation, only one bold line is used in FIG. 12 for representing the bus 1204, but it does not mean that there is only one bus or one type of bus.

A computer-readable storage medium (for example, a non-transitory computer-readable storage medium) is provided in some embodiments of the present disclosure, the computer-readable storage medium has stored computer program instructions, and the computer program instructions, upon being executed by a computer, enable the computer to perform the screen-mirrored picture display method as described in any one of the above embodiments.

For example, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage medium for storing information. The term "machine-readable storage medium" may include, but not limited to, a wireless channel and various other media capable of storing, containing, and/or carrying instructions and/or data.

A computer program product including instructions is provided in the embodiments of the present disclosure, when the computer program product is run on a computer, the computer is enabled to perform the screen-mirrored picture display method as described in any one of the above-mentioned embodiments.

The above descriptions are merely specific implementations of the present disclosure, but the scope of protection of the present disclosure is not limited thereto; any variations or replacements within the technical scope disclosed in the present disclosure shall fall within the protection scope of the present disclosure. Therefore, the protection scope of the present disclosure should be subject to the protection scope of the claims.

## Claims

1. A screen-mirrored picture display method, **characterized by** being applied to a first device, wherein the method comprises:
establishing a communication connection with a second device; and
after receiving a screen mirroring operation instruction sent from the second device, displaying a three-dimensional image of a target picture by performing screen mirroring;
wherein the three-dimensional image of the target picture is obtained by the first device or the second device performing conversion processing on a two-dimensional image of the target picture based on the screen mirroring operation instruction, and the screen mirroring operation instruction is used to indicate the first device to display the three-dimensional image of the target picture by performing screen mirroring.

2. The method according to claim 1, wherein in response to a computing power value of the first device being greater than a computing power value of the second device, and a stability value of a communication link between the first device and the second device being less than a preset threshold, the three-dimensional image of the target picture is obtained by the first device performing conversion processing on the two-dimensional image of the target picture.

3. The method according to claim 2, wherein in response to the computing power value of the first device being greater than the computing power value of the second device, and the stability value of the communication link between the first device and the second device being less than the preset threshold, the method further comprises:
acquiring two-dimensional image encoding data of the target picture in the second device;
converting the two-dimensional image encoding data of the target picture into three-dimensional image encoding data of the target picture; and
configuring a preset interface object for displaying a three-dimensional image by performing screen mirroring according to the three-dimensional image encoding data of the target picture, to obtain the three-dimensional image of the target picture.

4. The method according to claim 3, wherein converting the two-dimensional image encoding data of the target picture into the three-dimensional image encoding data of the target picture comprises:
collecting eye position data for a user, wherein the eye position data is used to provide a reference for a viewing angle for the three-dimensional image during a dimension conversion process of a picture; and
converting the two-dimensional image encoding data of the target picture into the three-dimensional image encoding data of the target picture according to the eye position data.

5. A screen-mirrored picture display method, **characterized by** being applied to a second device, wherein the method comprises:
after establishing a communication connection with a first device, sending a screen mirroring operation instruction to the first device, to make the first device display a three-dimensional image of a target picture by performing screen mirroring;
wherein the screen mirroring operation instruction is used to indicate the first device to display the three-dimensional image of the target picture by performing screen mirroring; and the three-dimensional image of the target picture is obtained by the first device or the second device performing conversion processing on a two-dimensional image of the target picture based on the screen mirroring operation instruction.

6. The method according to claim 5, wherein in response to a computing power value of the first device being less than or equal to a computing power value of the second device, and a stability value of a communication link between the first device and the second device being greater than or equal to a preset threshold, the three-dimensional image of the target picture is obtained by the second device performing conversion processing on the two-dimensional image of the target picture.

7. The method according to claim 6, wherein in response to the computing power value of the first device being less than or equal to the computing power value of the second device, and the stability value of the communication link between the first device and the second device being greater than or equal to a preset threshold, comprises:
acquiring two-dimensional image encoding data of the target picture;
converting the two-dimensional image encoding data of the target picture into three-dimensional image encoding data of the target picture; and
configuring a virtual interface object according to the three-dimensional image encoding data of the target picture, to obtain the three-dimensional image of the target picture.

8. The method according to claim 7, wherein converting the two-dimensional image encoding data of the target picture into the three-dimensional image encoding data of the target picture comprises:
acquiring eye position data for a user collected by the first device, wherein the eye position data is used to provide a reference for a viewing angle for the three-dimensional image during a dimension conversion process of a picture; and
converting the two-dimensional image encoding data of the target picture into the three-dimensional image encoding data of the target picture according to the eye position data.

9. The method according to claim 7, wherein after configuring the virtual interface object according to the three-dimensional image encoding data of the target picture to obtain the three-dimensional image of the target picture, the method further comprises:
acquiring target image encoding data of the three-dimensional image of the target picture, and sending the target image encoding data to the first device, to make the first device display the three-dimensional image of the target picture according to the target image encoding data.

10. The method according to claim 5, wherein after establishing the communication connection with the first device, the method further comprises:
determining whether a target object corresponding to the target picture is included in a preset whitelist;
in response to the preset whitelist including the target object, sending the screen mirroring operation instruction to the first device.

11. A screen-mirrored picture display method, **characterized by** comprising:
establishing a communication connection between a first device and a second device; and
displaying a three-dimensional image of a target picture by the first device, and displaying a two-dimensional image of the target picture by the second device;
wherein the three-dimensional image of the target picture is obtained by the first device or the second device performing conversion processing on a two-dimensional image of the target picture based on the screen mirroring operation instruction, and the screen mirroring operation instruction is used to indicate the first device to display the three-dimensional image of the target picture.

12. A screen-mirrored picture display system, **characterized by** comprising: a first device and a second device; wherein both the first device and the second device store executable instructions; and the first device and the second device, upon executing the instructions, execute the screen-mirrored picture display method according to claim 11.

13. A electronic device, **characterized by** comprising: a memory and a processor, wherein the memory is coupled to the processor, the memory is configured to store instructions executable for the processor, and the processor is configured, upon the instructions being executed, to perform the screen-mirrored picture display method according to any one of claims 1 to 10.

14. A computer-readable storage medium, **characterized in that** the computer-readable storage medium stores computer instructions that, upon being run on a computer, enable the computer to execute the screen-mirrored picture display method according to any one of claims 1 to 11.
